# FASCICULE DE BREVET EUROPEEN

(11) **EP 2 341 471 B1**
(45) Date de publication et mention de la délivrance du brevet: **20.02.2013**
(21) Numéro de dépôt: 09180782.6
(22) Date de dépôt: 28.12.2009
(51) Int. Cl.: G06K 19/077

(54) **Procédé de fabrication de cartes électroniques**
Verfahren zur Herstellung von elektronischen Karten
Method for manufacturing electronic cards

(43) Date de publication de la demande: 06.07.2011
(73) Titulaire: NagraID S.A., 2301 La Chaux-de-Fonds (CH)
(72) Inventeur: Droz, François, 2035 Corcelles (CH)
(74) Mandataire: Surmely, Gérard

(56) Documents cités:
- EP-A1- 1 559 068
- DE-A1- 19 601 389

## Description

### Domaine technique

La présente invention concerne un procédé de fabrication de cartes électroniques complexes comprenant chacune une première unité électronique, agencée au moins partiellement dans une fenêtre d'une couche solide de la carte, et une deuxième unité électronique reliée électriquement à la première unité électronique et incorporée dans une couche interne formée par un matériau de remplissage qui recouvre au moins une des surfaces de cette deuxième unité électronique. En particulier, le matériau de remplissage est une résine apportée dans un état non solide lors du procédé de fabrication ou par une résine apportée sous forme de feuilles thermofusibles fondues au moins partiellement, de manière à former une couche interne de la carte. On notera que la couche interne formée par le matériau de remplissage peut contenir d'autres éléments ou des structures solides, en particulier des structures de positionnement ou de remplissage de cette couche interne.

Par carte électronique, on comprend une carte du type bancaire et également d'autres dispositifs ayant des formes diverses, notamment une étiquette électronique ou un dispositif électronique portable.

### Arrière-plan technologique

On connait du document EP 1 559 068 un procédé de fabrication de modules électroniques comprenant chacun deux feuilles isolantes définissant ses faces externes, au moins un élément électronique ayant une surface externe affleurant sensiblement une des faces externes du module électronique et un circuit électronique agencé entre les deux feuilles isolantes et connecté à l'élément électronique. Ce procédé prévoit les étapes suivantes :
- apporter au moins une première feuille isolante comportant une fenêtre destinée à loger l'élément électronique ;
- insérer l'élément électronique dans la fenêtre de la première feuille isolante, cet élément électronique étant pourvu de plages conductrices de connexion agencées sur une face interne opposée à sa face externe ;
- superposer un film adhésif de protection s'étendant au moins dans la région entre l'élément électronique et les bords de la fenêtre, le film de protection maintenant l'élément électronique dans la fenêtre et fermant une fente éventuelle entre cet élément électronique et la paroi latérale de ladite fenêtre ;
- poser le circuit électronique dans une zone voisine de la fenêtre et connecter l'élément électronique au circuit électronique au travers d'une ouverture prévue ou effectuée dans le film de protection et située en regard desdites plages conductrices de connexion ;
- apporter une matière de remplissage sur l'ensemble des éléments déjà apportés et superposer une seconde feuille isolante sur la matière de remplissage ;
- presser ou laminer l'ensemble résultant des étapes précédentes, la matière de remplissage formant une couche compensant les reliefs de surface dus à l'assemblage du module électronique.

Le procédé de fabrication décrit ci-avant répond à un problème important, à savoir d'éviter que le matériau de remplissage, formé généralement par une résine qui se trouve dans un état liquide visqueux lors de l'application d'une pression pour former le module électronique, s'écoule dans une fente entre l'élément électronique et la paroi latérale de la fenêtre dans laquelle il est agencé, de manière à éviter que cette résine s'étende au moins partiellement sur la surface externe visible de l'élément électronique. Cependant, ce procédé de fabrication présente un problème en relation avec la succession de ses étapes, en particulier le fait que la connexion électrique entre l'élément électronique visible et l'unité électronique interne s'effectue une fois que l'élément électronique a été inséré dans une fenêtre d'une couche isolante externe de la carte en fabrication et que le film adhésif de protection soit mis en place. Cette succession d'étapes pose un problème pratique étant donné que les installations de fabrication de cartes ne sont généralement pas équipées de dispositif de soudage ou d'assemblage de diverses unités électroniques. En effet, généralement, les divers éléments et circuits électroniques sont premièrement assemblés pour former des ensembles électroniques et ensuite ces ensembles électroniques sont apportés dans une installation classique de fabrication de cartes dans laquelle les divers matériaux servant à former les cartes sont apportés et traités de manière appropriée pour obtenir des cartes électroniques de bonne qualité dans lesquelles les ensembles électroniques sont respectivement incorporés. Le document de l'art antérieur cité ci-avant ne propose pas de séparer temporellement la production des ensembles électroniques et la fabrication de cartes incorporant de tels ensembles électroniques. Bien que le procédé décrit dans ce document cité puisse être mis en oeuvre et permette d'obtenir des cartes électroniques complexes, il présente un inconvénient majeur pour l'homme du métier spécialiste de la fabrication de cartes électroniques terminées ou d'inlets, lequel préfère séparer la production des ensembles électroniques du procédé de formation des cartes.

Un but de la présente invention est de palier l'inconvénient majeur du procédé de l'art antérieur susmentionné.

### Résumé de l'invention

Le procédé de fabrication de cartes électroniques selon l'invention se caractérise principalement par le fait que l'ensemble électronique, formé par au moins une première unité électronique prévue dans une fenêtre d'une couche solide de la carte et par une deuxième unité électronique agencée dans une couche interne ou le corps de cette carte, est fabriqué en premier lieu avant la production des cartes électroniques; c'est-à-dire avant l'apport de couches solides et des autres matériaux de formation du corps de carte. Ainsi, l'ensemble électronique incorporé dans chaque carte est effectué dans une étape préliminaire, selon une manière classique de procéder. Pour ce faire, divers modes de mise en oeuvre du procédé de fabrication de cartes sont proposés. En particulier, il est prévu selon l'invention que le film de protection soit formé de plusieurs parties ou soit formé d'une seule pièce présentant au moins une fente.

Dans le cas où le film de protection est en plusieurs parties, il est prévu que ces parties présentent des profils complémentaires permettant de recouvrir le bord externe d'une face arrière de la première unité électronique, tout en s'étendant dans toute la zone périphérique à cette première unité électronique et en définissant une ouverture pour le passage de la liaison électrique entre les première et deuxième unités électroniques. Cette ouverture a donc des dimensions inférieures à celles de la première unité électronique. Ainsi, une fois l'ensemble électronique apporté dans l'installation de fabrication de cartes et la première unité électronique insérée au moins partiellement dans une fenêtre de la première couche solide, le film de protection peut recouvrir correctement une fente éventuelle entre la paroi latérale de la fenêtre et la première unité électronique.

Dans le cas où le film de protection est formé d'une seule pièce présentant au moins une fente, cette fente est prévue soit traversante entre une ouverture centrale du film et le bord externe de celui-ci, cette fente pouvant ainsi être écartée pour permettre le passage de la liaison électrique à l'intérieur de ladite ouverture centrale, soit, lorsque la fente n'est pas traversante, cette dernière est prévue de manière que la première ou la deuxième unité électronique puisse passer au travers de l'ouverture centrale du film de protection en écartant les parties de ce film de protection situées en bordure de ladite fenêtre.

Le procédé de fabrication de cartes électroniques selon l'invention comprend trois modes de mise en oeuvre principaux. Dans un premier mode de mise en oeuvre de l'invention, tel que défini à la revendication 1 jointe à la présente description de l'invention, l'ensemble électronique, formé au moins des première et deuxième unités électroniques pré-assemblées, est premièrement apporté dans l'installation de fabrication de cartes où la première unité électronique est placée dans une fenêtre d'une première couche solide. Ensuite, un film de protection tel que décrit précédemment est apporté et agencé de manière à couvrir essentiellement toutes fentes éventuelles entre la première unité électronique et la paroi latérale de la fenêtre.

Selon le deuxième mode de mise en oeuvre de l'invention tel que défini à la revendication 2 jointe à la présente description de l'invention, l'ensemble électronique est premièrement réalisé et ensuite, avant l'apport de cet ensemble sur une première couche solide et l'agencement de la première unité électronique dans la fenêtre de cette couche solide, le film de protection est assemblé avec cet ensemble électronique de manière que la liaison électrique soit située dans une ouverture définie par ce film de protection et que ce dernier soit donc situé entre les première et deuxième unités électroniques. Ensuite, l'ensemble électronique et le film de protection pré-assemblés sont apportés dans l'installation de fabrication de cartes où ladite couche solide est apportée, la première unité électronique est insérée convenablement dans la fenêtre prévue dans cette couche solide, et le film de protection est appliqué sur une zone périphérique à la fenêtre et, si pas déjà effectué au préalable, au moins contre la surface latérale et/ou le bord externe d'une face arrière de la première unité. Dans une variante de ce deuxième mode de réalisation, on assemble premièrement un film de protection avec ladite première unité en appliquant ce film au moins contre le bord externe d'une face arrière de cette première unité, puis on établit une liaison électrique avec la deuxième unité électronique au travers d'une ouverture de ce film avant l'apport du film de protection pré-assemblé à l'ensemble électronique dans une installation de fabrication de cartes où la première couche solide est apportée.

Selon le troisième mode de mise en oeuvre de l'invention, tel que défini à la revendication 6 jointe à la présente description de l'invention, on fabrique premièrement, d'une part, l'ensemble électronique, formé au moins des première et deuxième unités électroniques reliées électriquement, et d'autre part une structure comprenant un film de protection présentant au moins une ouverture, ayant des dimensions inférieures à celles de la première unité électronique et à sa périphérie des volets séparés par des fentes, et une première couche solide ayant au moins une fenêtre destinée à recevoir au moins partiellement la première unité électronique. Ledit film de protection est assemblé à la première couche solide avec ladite au moins une ouverture centrée sur ladite au moins une fenêtre. Ensuite, on apporte ladite structure et ledit ensemble électronique dans une installation et on place la première unité électronique en regard de ladite ouverture, puis cette première unité est enfoncée dans ladite fenêtre en pliant lesdits volets en direction de la paroi latérale de l'ouverture jusqu'à ce que ces volets soient libérés et remontent alors au moins partiellement en direction du plan général du film de protection. Ensuite, on remonte la première unité en direction de ladite ouverture et lesdits volets sont appliqués au moins partiellement contre la surface latérale et/ou une face arrière de cette première unité, de manière à fermer une fente éventuelle entre la paroi latérale de la fenêtre et la première unité, ladite liaison électrique traversant ladite ouverture.

Finalement, il est prévu dans le procédé selon l'invention d'apporter sur le film de protection un matériau de remplissage, en particulier une résine, qui se trouve au moins partiellement dans un état non solide lors de la formation d'une couche ou du corps des cartes au moins partiellement par ce matériau de remplissage, ce dernier recouvrant au moins partiellement ladite liaison électrique dudit ensemble électronique.

On notera que, dans une variante, le film de protection présente une surface adhésive assurant son maintien en place et empêchant également que, lors d'une étape ultérieure d'apport d'un matériau de remplissage recouvrant au moins partiellement la liaison électronique, ce matériau de remplissage ne s'infiltre sous le film de protection et coule ainsi dans la fenêtre. D'autres variantes assurant le maintien en place du film de protection peuvent être envisagées. Par exemple, la couche solide peut présenter une surface supérieure adhésive dans la zone prévue pour le film de protection. Dans une autre variante, le film de protection est soudé thermiquement à la couche solide, notamment en quelques zones ponctuelles.

Diverses variantes du procédé de fabrication selon l'invention font l'objet des revendications dépendantes.

### Brève description des dessins

D'autres caractéristiques et avantages du procédé de fabrication de cartes électroniques selon l'invention ressortiront également de la description détaillée suivante de modes de mise en oeuvre de ce procédé, cette description étant effectuée à l'aide des dessins annexés, donnés à titre d'exemples nullement limitatifs et dans lesquels :
- la figure 1 montre un premier mode de réalisation d'un ensemble électronique incorporé dans chaque carte fabriquée selon le procédé de l'invention ;
- la figure 2 montre l'ensemble électronique de la figure 1 assemblé avec un film de protection ;
- la figure 3 est une vue de dessus d'une carte électronique selon l'invention dans un état intermédiaire lors du procédé de fabrication de l'invention ;
- la figure 4 est une coupe selon la ligne IV-IV de la figure 3 avec la carte électronique dans un état fini ou semi-fini ;
- la figure 5 est une vue en coupe selon la ligne V-V de la figure 3 avec la carte électronique dans un état fini ou semi-fini ;
- les figures 6A et 6B représentent respectivement deux variantes de réalisation d'un film de protection selon l'invention ;
- la figure 7 représente schématiquement un deuxième mode de réalisation d'un ensemble électronique incorporé dans chaque carte fabriquée selon le procédé de l'invention;
- la figure 8 est une vue en coupe d'une carte obtenue par le procédé selon l'invention et incorporant l'ensemble électronique de la figure 7 ;
- la figure 9A représente schématiquement une étape d'un deuxième mode de mise en oeuvre du procédé selon l'invention ;
- la figure 9B montre partiellement le produit intermédiaire résultant de l'étape schématisée à la figure 9A ;
- la figure 10 montre une coupe d'une variante de réalisation d'une carte électronique obtenue par le procédé selon l'invention ;
- la figure 11 est une vue de dessus d'un film de protection pour la production d'un lot de cartes selon un troisième mode de mise en oeuvre du procédé de l'invention ; et
- les figures 12A, 12B, 12C, 12D et 12E représentent une succession d'étapes intervenant dans le troisième mode de mise en oeuvre susmentionné.

### Description détaillée de l'invention

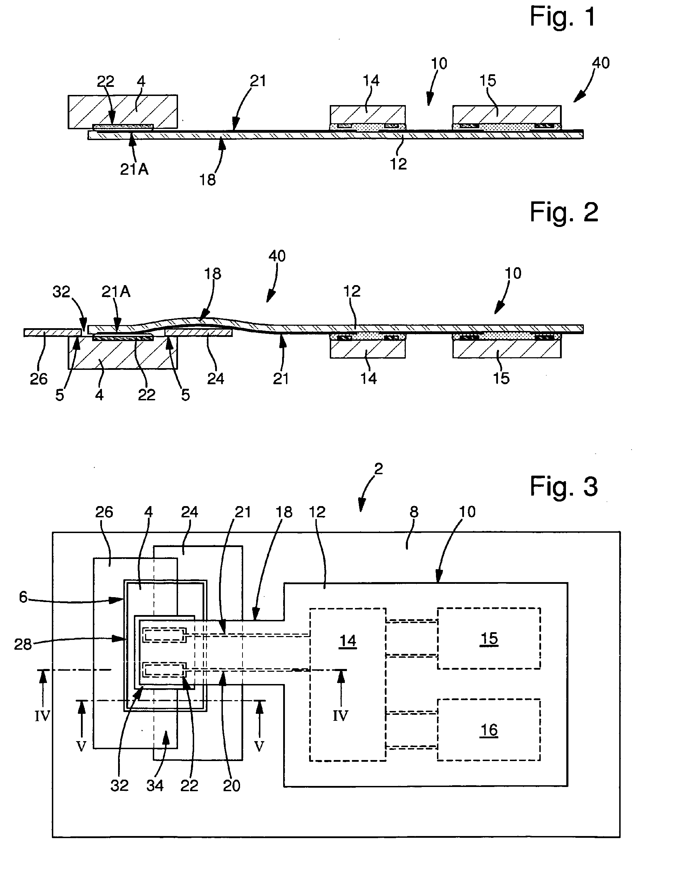

A l'aide des figures 1 à 5, on décrira ci-après un premier mode de mise en oeuvre d'un procédé de fabrication de cartes électroniques selon l'invention.

Dans une étape préliminaire de ce procédé de fabrication de cartes électroniques, une première unité électronique 4 est assemblée à une deuxième unité électronique 10 pour former l'ensemble électronique 40. L'unité électronique 10 est formée d'un support 12 du type PCB à la surface duquel sont agencés divers composants 14, 15 et 16. Ces circuits électroniques peuvent être formés de toute sorte de composants et avoir diverses fonctions. Le composant 14 peut par exemple constituer un microprocesseur, le composant 15 un affichage et le composant 16 une batterie. On notera que la deuxième unité électronique 10 peut également, dans une variante, former une batterie ou, dans une autre variante, former une antenne. On notera également que la première unité électronique peut être formée par une seule plage de contact électrique externe reliée à une unité électronique interne de la carte.

Le PCB 12 peut être rigide ou souple. Ce support 12 est prolongé par une languette 18 qui elle est prévue souple ou, pour le moins, capable de subir une déformation élastique. Sur la languette 18 sont agencées des pistes conductrices 20 et 21 destinées à établir des connexions électriques entre l'unité 10 et l'unité 4. A cet effet, cette unité 4 possède des plages de connexion électrique 22 auxquelles les plages terminales 20A et 21 A des pistes 20 et 21 sont reliées électriquement, notamment par soudure à l'étain ou à l'aide d'une colle conductrice. L'étain peut être déposé préalablement sous forme d'une fine couche à la surface des plages de contact 22. On notera que, selon la terminologie utilisée pour la présente description de l'invention, la languette 18 munie des pistes conductrices forment une liaison électrique entre la première unité électronique 4 et la deuxième unité électronique 10. On remarquera que la liaison électrique décrite ici est un exemple avantageux, mais que tout type de liaison électrique entre deux unités électroniques connue de l'homme du métier est envisageable. En particulier, plus de deux pistes conductrices ou connexions électriques peuvent être prévues entre les deux unités. La languette 18 peut servir de support à un grand nombre de pistes de connexion électrique entre les deux unités électroniques.

Suite à la formation de l'ensemble électronique 40, on apporte un film de protection en deux parties 24 et 26, lesquelles présentent des profils respectifs prévus pour définir lors de leur assemblage une ouverture centrale 32 dans laquelle passe la liaison électrique 18, cette ouverture ayant des dimensions inférieures à celles de la première unité électronique 4. Le film de protection en deux parties est agencé entre les première et deuxième unités électroniques 4 et 10 avec la liaison électrique 18 traversant l'ouverture 32. Dans la variante représentée, les deux parties présentent une forme générale en U. Dans une autre variante, seule une des deux parties a une forme en U ou les deux parties ont une forme en L. Le film de protection comprend une zone périphérique à son ouverture 32 qui est appliquée contre le bord externe 5 de la face arrière de la première unité électronique 4. Le film de protection 24, 26 s'étend alors dans une zone périphérique à la première unité 4, comme représenté à la figure 2. La fonction du film de protection sera décrite par la suite.

Les ensembles électroniques 40 munis du film de protection sont ensuite apportés dans une installation de production de cartes électroniques ou plusieurs cartes ou inlets sont généralement fabriquées simultanément sous forme d'une plaque ou feuille. Dans cette installation, on apporte une première couche solide ayant au moins une fenêtre 6 prévue pour chaque carte et destinée à recevoir au moins partiellement la première unité 4 de l'ensemble électronique 40. Chaque unité 4 est ainsi placée dans une fenêtre 6 de la couche solide 8. Le film de protection est alors appliqué contre la zone périphérique de la fenêtre 6 de manière à fermer une fente éventuelle 28 entre la paroi latérale 30 de cette fenêtre et la première unité 4. Pour assurer que la fente 28 soit entièrement fermée par le film de protection, les deux parties 24 et 26 de celui-ci présentent une zone 34 où ces parties sont superposées, la partie 26 ayant une région recouvrant partiellement la partie 24. Dans une variante, il est cependant possible de ne pas prévoir de zone de recouvrement, mais d'assembler correctement les deux parties l'une à côté de l'autre sans laisser d'espace entre elles.

Dans une étape ultérieure, on apporte sur la première couche solide 8 et sur le film de protection un matériau de remplissage 42 et on applique par exemple une pression sur ce matériau de remplissage alors dans un état non solide pour former une couche des cartes électroniques en fabrication, le matériau de remplissage entourant la liaison électrique 18.

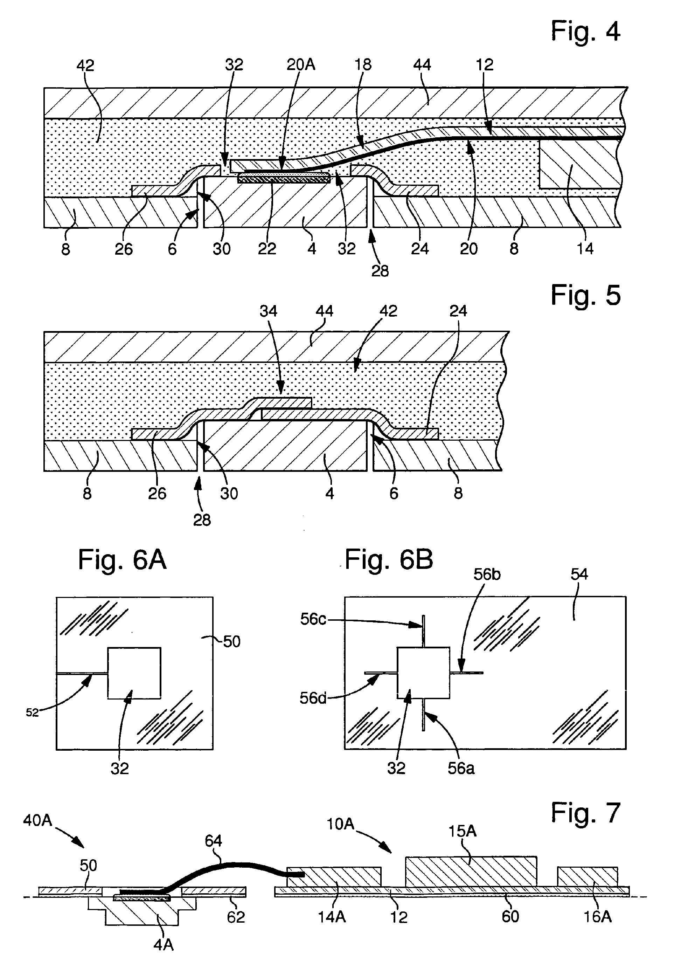

Dans la variante représentée aux figures 4 et 5, avant l'application d'une pression sur le matériau de remplissage 42, on apporte une deuxième couche solide 44 sur ce matériau de remplissage. De préférence, le film de protection comprend une surface adhésive ou thermocollante permettant de fixer premièrement ce film de protection contre la face arrière de l'unité 4 et/ou de coller ce film de protection contre la surface supérieure de la couche solide 8. Le fait de prévoir le film de protection en deux ou plusieurs parties permet de l'agencer aisément en bordure de la face arrière de l'unité électronique 4 tout en définissant une ouverture 32 pour le passage de la liaison électrique 18. Grâce à cette caractéristique, il est ainsi possible d'agencer correctement le film de protection après la formation de l'ensemble électronique 40.

On remarquera que l'ensemble électronique peut comprendre plus de deux unités, en particulier au moins deux unités agencées au moins partiellement dans des fenêtres respectives d'une ou deux couche(s) solide(s) de manière à être apparentes.

Aux figures 6A et 6B sont représentés deux variantes d'un autre mode de réalisation du film de protection qui permet également de répondre au but de la présente invention. Le film de protection 50 de la figure 6A est formé d'une seule pièce définissant une ouverture centrale 32 et présentant une fente 52 qui traverse le film 50 depuis l'ouverture 32 jusqu'au bord externe de ce film. Il est ainsi du style bague fendue. A nouveau, afin de permettre d'agencer une zone du film 50, périphérique à l'ouverture 32, contre le bord externe de la face arrière de l'unité 4, l'ouverture 32 présente des dimensions inférieures à celles de cette unité 4. La liaison électrique 18 peut être aisément agencée dans l'ouverture 32 en insérant cette liaison 18 dans la fente 52, puis en la déplaçant jusqu'à ce qu'elle soit située dans l'ouverture 32. Ensuite, on place correctement le film 50 partiellement contre la face arrière de l'unité 4 de manière similaire à l'agencement représenté aux figures 2 et 4.

Le film de protection 54 de la variante représenté à la figure 6B se distingue par le fait qu'une pluralité de fentes 56a à 56d est agencée à la périphérie de l'ouverture 32. Ces fentes ne traversent pas le film 54 jusqu'à son bord externe. Elles permettent cependant de définir des parties périphériques à l'ouverture 32 qui peuvent aisément être pliées hors du plan général du film 54 et permettre ainsi le passage d'une unité électronique présentant des dimensions supérieures à celles de l'ouverture 32. Pour agencer selon la présente invention le film de protection 54 entre les première et deuxième unités 4 et 10 d'un ensemble électronique 40, on pousse l'unité 4 au travers de l'ouverture 32 en écartant les parties périphériques à cette ouverture 32 situées entre les fentes 56a à 56d. Ces parties périphériques subissent ainsi une déformation élastique et reviennent dans le plan général du film de protection 54 après le passage de l'unité 4. La liaison électrique 18 se trouve alors dans l'ouverture 32. De manière à limiter au maximum un écoulement d'une résine dans une fente éventuelle ou de manière générale d'un matériau de remplissage apporté lors de la formation du corps de carte, on prévoit de préférence que les fentes aient une largeur minimale, voir nulle. Par fente, on comprend donc en particulier la réalisation d'un simple découpage dans le film de protection, notamment selon une portion de ligne droite.

Le matériau de remplissage apporté pour former le noyau de carte ou une couche interne de cette carte est de préférence formé par une résine apportée dans un état liquide visqueux ou sous forme d'un solide thermofusible qui est fondu ensuite au moins partiellement de manière à permettre un enrobage de la deuxième unité électronique 10. Selon un mode de mise en oeuvre préféré de l'étape de formation du noyau ou de la couche interne de la carte, on tourne dans un premier temps les deuxièmes unités 10 en pliant élastiquement la liaison électrique 18, les unités 10 étant ainsi tournées sur leur côté supérieur de l'autre côté de l'ouverture 6 relativement au côté prévu pour ces unités au sein de la carte finie. Dans une variante, les unités 10 sont simplement relevées par des moyens appropriés et mises par exemple momentanément dans une position sensiblement verticale. Ensuite, on apporte une première partie du matériau de remplissage sur la feuille solide inférieure 8, de manière que cette première partie de résine recouvre au moins en partie les zones de cette couche 8 où il est prévu d'agencer finalement les unités 10. Ensuite, les unités électroniques 10 sont rabattues ou tournées à nouveau sur leur côté inférieur et situées sur la première partie du matériau de remplissage déposée antérieurement. Une deuxième partie du matériau de remplissage est alors apportée sur les unités 10 de sorte que ce matériau de remplissage enrobe entièrement ces unités et la majeure partie de la liaison électrique 18. Cette méthode permet en particulier d'assurer la présence du matériau de remplissage sous les composants 14 à 16 de l'unité 10. Ainsi, on évite que certaines parties de la couche inférieure 8 ne soit pas recouverte de résine ; ce qui pourrait alors engendrer des problèmes ultérieurs de déformation de la surface de la carte terminée.

Selon une variante de mise en oeuvre du procédé de l'invention, en particulier dans la situation décrite à l'aide des figures 1 à 5, il est prévu d'apporter la résine essentiellement au cours d'une seule et même étape et d'étaler cette résine à l'aide d'un rouleau ou d'une lame selon une direction et un sens qui assure qu'une partie de la résine ainsi étendue pénètre sous le support 12 de l'unité 10. Ceci est favorisé par le fait que les composants électroniques de l'unité 10 sont situés sous ce support. Ainsi, le support 12 est situé initialement à une certaine distance de la couche solide 8 et une résine dans un état liquide visqueux pénètre aisément dessous ce support et également en partie dessus lors de l'étape de formation d'une couche de résine. On notera ici que, dans une variante où l'ensemble électronique 40 est fabriqué de manière que les composants de la deuxième unité 10 soient situés au-dessus du support 12 une fois la première unité 4 agencée dans l'ouverture de la couche inférieure, on peut prévoir des moyens favorisant le passage d'une partie de la résine sous le support 12. A titre d'exemple nullement limitatif, ce support peut présenter des petites saillies engendrant ainsi un espace vide entre ce support et la couche solide inférieure. On peut également prévoir des ouvertures dans le support 12 pour favoriser le passage d'une partie de la résine sous ce support. Dans une variante, le support 12 peut présenter une partie d'extrémité relevée, notamment définissant un plan incliné. La résine est alors étalée par un rouleau ou une lame selon une direction et un sens qui tend à soulever les deuxièmes unités électroniques internes, la résine poussée horizontalement pressant contre ces parties relevées relativement au plan général du support 12 et exerçant ainsi une force de poussée vers le haut. Dans une variante, la résine est introduite latéralement entre les deux couches solides 8 et 44, notamment par injection dans un moule.

Selon une autre variante de mise en oeuvre du procédé selon l'invention, dans le cas susmentionné où le support 12 de la deuxième unité électronique 10A est prévu sous les composants électroniques de cette deuxième unité, il est prévu de déposer au préalable un film de résine 60 sous le support 12. Ce film de résine peut être de nature semblable à un film de résine 62 déposé sous le film de protection 50 (figure 7).

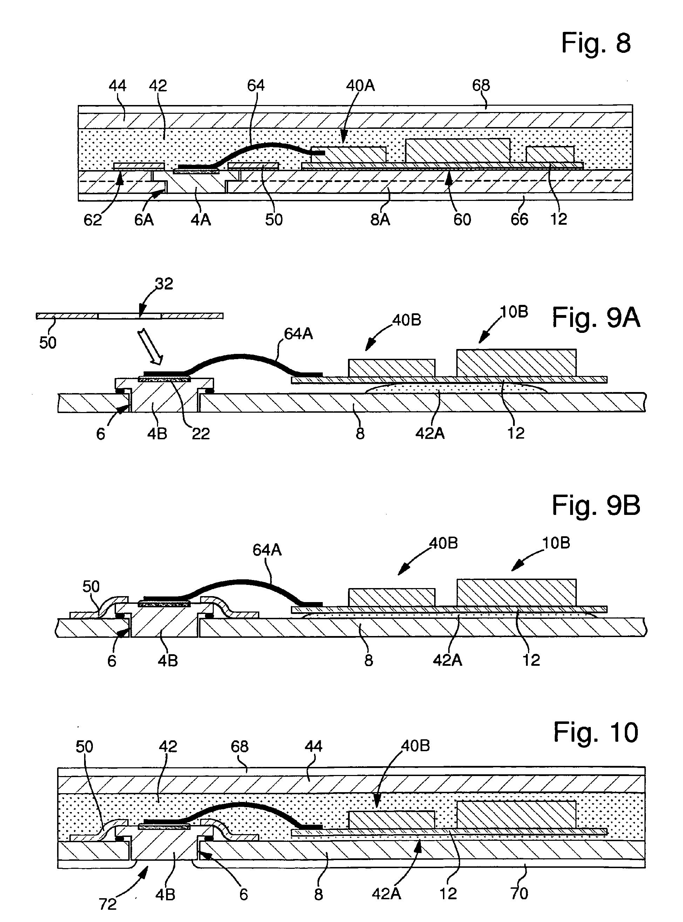

Selon le mode de réalisation de l'ensemble électronique 40A de la figure 7, la liaison électrique 64 entre les unités 4A et 10A est formée par des languettes métalliques qui sortent du module 14A. Ces languettes métalliques sont déformables et permettent d'agencer aisément le film de protection 50 contre la face arrière de l'unité 4A. On remarquera que l'unité 4A présente une paroi latérale avec un décrochement. Comme représenté à la figure 8, l'ensemble électronique 40A est ensuite agencé sur une couche solide 8A présentant des ouvertures 6A avec un escalier contre lequel repose la partie supérieure de l'unité 4A. La couche solide 8A peut être formée de deux couches laminées ensemble et présentant chacune une ouverture de dimensions différentes pour définir un logement ayant en coupe un profil correspondant à celui de l'unité 4A. Dans le mode de réalisation d'une carte selon l'invention représenté à la figure 8, il est prévu d'ajouter finalement deux films externes transparents 66 et 68. On notera que le film transparent 66 recouvre l'unité électronique 4A. Cette dernière forme par exemple un détecteur de lumière, un capteur solaire ou une source d'émission lumineuse, en particulier dans le domaine infrarouge. L'unité 4A peut également définir un affichage électronique visible au travers du film transparent 66.

On notera encore que le film de résine 60 situé entre la couche 8A et le support 12 peut être identique à la résine 42 formant la couche interne de la carte. L'adhérence du film adhésif 60 à la couche inférieure peut être réalisée notamment par un apport de chaleur au travers de cette couche.

A l'aide des figures 9A, 9B et 10, on décrira ci-après un deuxième mode de mise en oeuvre du procédé de fabrication de cartes électroniques selon la présente invention. Ce deuxième mode se différencie essentiellement du premier mode par une variation dans la succession des étapes du procédé. Comme représenté schématiquement à la figure 9A, l'ensemble électronique 40B est premièrement apporté sur la couche solide inférieure 8 et l'unité 4B est insérée dans la cavité 6 prévue dans cette couche. On remarquera ici qu'une partie 42A de la résine, destinée à former une couche interne dans laquelle est incorporée l'unité électronique 10B, est apportée avant l'apport de l'ensemble 40B ou, dans une variante, cette partie de résine 42A est apportée alors que l'unité 10B est relevée ou tournée, comme cela à déjà été décrit précédemment. Une fois la première unité 4B logée partiellement dans l'ouverture 6 de la couche solide 8, le film de protection 50 est apporté et mis en place comme représenté à la figure 9B, en insérant la liaison électrique 64A dans l'ouverture 32 du film 50 au travers de la fente 52 prévue dans ce film (figure 6A). On notera que l'unité 4B peut être fixée à la couche par des points de colle avant l'agencement du film de protection. Ce film est formé dans cette variante d'une seule pièce présentant au moins une fente depuis une ouverture effectuée dans cette pièce, les dimensions de cette ouverture étant inférieures à celles de la première unité 4B. Le film de protection 50 est mis en place de manière qu'il recouvre une zone périphérique de la fenêtre 6 ainsi que le bord externe de la face arrière de la première unité 4B où sont situées les plages de connexion électrique 22. Cet agencement selon l'invention permet de fermer une fente éventuelle entre la paroi latérale de chaque fenêtre prévue dans la couche solide 8 et la première unité 4B placée dans cette fenêtre. Comme dans le premier mode de mise en oeuvre, le film de protection peut être formé de plusieurs parties présentant des profils respectifs prévus pour définir lors de leur assemblage sur la couche solide inférieure 8 une ouverture dans laquelle passe la liaison électrique 64A.

Ensuite, comme dans le premier mode de mise en oeuvre de l'invention, on apporte sur la première couche solide 8 et le film de protection 50 un matériau de remplissage, notamment une résine et on étend ce matériau de remplissage alors dans un état non solide pour former une couche des cartes électroniques, ce matériau de remplissage recouvrant alors la deuxième unité électronique 10B.

La variante de carte représentée à la figure 10 se distingue notamment de celle de la figure 8 par le fait que le film transparent inférieur 70 présente une fenêtre 72 agencée en face de la surface externe de la première unité 4B. L'unité électronique 4B forme ici par exemple un capteur d'empreinte digitale. Cette dernière variante de réalisation présente l'avantage de permettre de fermer la fente éventuelle entre l'unité 4B et la paroi latérale de la fenêtre 6 du côté de la surface externe de la couche solide 8.

On remarquera que, dans les divers modes de réalisation d'une carte précédemment décrits, le film de protection présente des dimensions limitées de manière qu'il ne s'étend pas sous l'entier de la deuxième unité électronique incorporée dans la couche de résine. En particulier, le film de protection a des dimensions réduites et n'est pas superposé à la deuxième unité interne incorporée dans la couche de résine. On évite ainsi d'avoir un film recouvrant la majeure partie de la couche solide inférieure et formant ainsi une interface entre la couche de résine et cette couche solide inférieure. Même si le film de protection présente des surfaces adhésives ou thermocollantes, l'adhérence de ce film à la couche solide inférieure peut être moindre. Un film de protection traversant la carte pourrait ainsi amener des problèmes d'exfoliation de la couche solide inférieure.

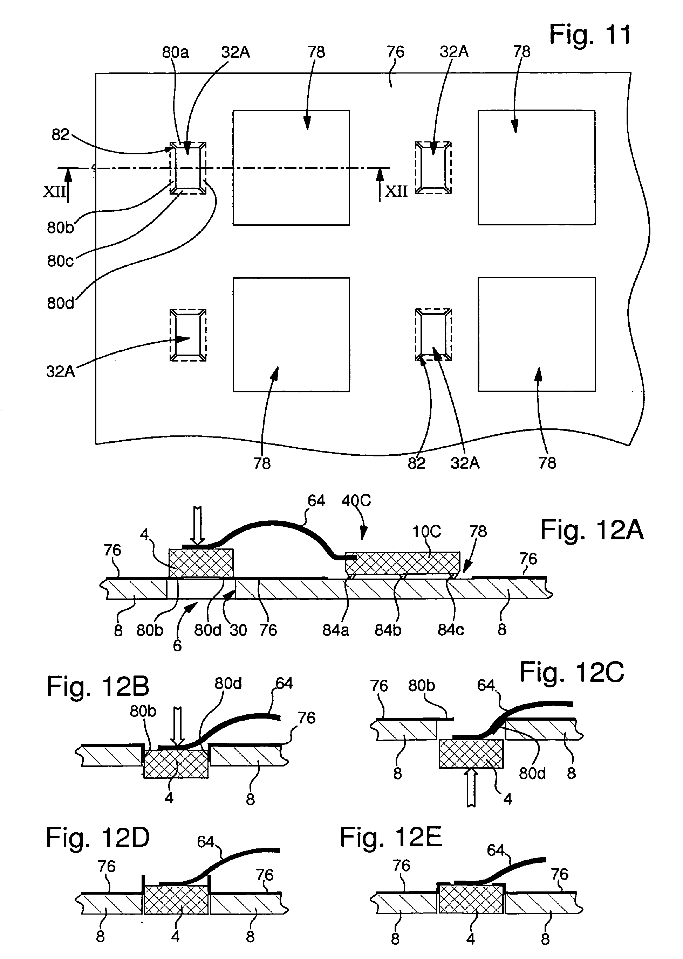

A l'aide des figures 11 et 12A à 12E, on décrira ci-après un troisième mode de mise en oeuvre du procédé de fabrication de cartes électroniques selon la présente invention, lequel est particulièrement adapté à une production automatisée et permet d'obtenir des cartes de très bonne qualité, sans risque de décollement au niveau du film de protection.

Le film de protection 76 est réalisé pour plusieurs cartes fabriquées en lot, sous forme d'une plaque dans laquelle les cartes sont ensuite découpées. Ce film 76 présente des ouvertures 32A, prévues pour le passage des liaisons électriques 64 des ensembles électroniques 40C incorporés dans les cartes, et de préférence des ouvertures 78 dans les zones prévues pour les deuxièmes unités électroniques 10C. Chaque ouverture 32A présente quatre volets 80a à 80d définis par quatre fentes 82 prévues dans les angles de cette ouverture 32A. On remarquera que le film de protection est prévu ici très mince.

Dans une première étape du procédé de production de cartes, le film 76 est assemblé par laminage, notamment à chaud, avec une couche solide 8 présentant des ouvertures 6 prévues pour recevoir respectivement les premières unités 4 des ensembles électroniques préfabriqués 40C. Cette couche solide et le film de protection adhère ainsi solidement l'un à l'autre. Les ouvertures 32A sont centrées sur les ouvertures 6. Des volets 80a - 80d sont alors situés le long du périmètre de chaque ouverture 6 dans le plan général du film de protection 76. On notera que les fentes peuvent être réalisées suite à l'assemblage par laminage, en particulier dans le cas d'un laminage à chaud.

Ensuite, les ensembles électroniques 40C sont apportés sur la structure formée de la couche inférieure 8 et du film de protection 76 (figure 12A) et les premières unités 4 sont poussées dans les ouvertures 6 en pliant les volets 80a -80d contre la paroi latérale 30 de ces ouvertures (figure 12B). On descend les unités 4 suffisamment pour libérer lesdits volets qui remontent alors au moins partiellement en direction du plan général du film 76 (figure 12C). Finalement, les unités 4 sont remontées dans les ouvertures 6 à un niveau correspondant à celui prévu dans les cartes finies (figure 12D). Les volets se trouvent alors en appui contre la surface latérale de l'unité 4. Pour fermer de manière sûre la fente entre l'unité 4 et la paroi 30 de l'ouverture 6 où elle est insérée, on plie de préférence les extrémités des volets contre le bord externe de la face arrière de l'unité 4 (figure 12E). De préférence ces extrémités pliées sont collées contre ladite face arrière. A nouveau les fentes 82 peuvent avoir une largeur quasi nulle. Ainsi lors d'un apport ultérieur de résine sur le film 76, les unités électroniques 10C et leurs liaisons électriques 64 respectives aux unités 4, cette résine ne coulera pas le long des parois 30 des fenêtres 6. Les étapes ultérieures sont similaires à celles des autres modes de mise en oeuvre du procédé, de même que les variantes envisageables pour ces étapes ultérieures. Elles ne seront pas décrites ici à nouveau en détail.

Dans une variante non représentée, la première unité électronique présente un rétrécissement dans sa partie interne, ce rétrécissement définissant au niveau de la surface supérieure interne de la couche solide 8 une surface périphérique horizontale de cette première unité sensiblement dans le plan de ladite surface supérieure interne alors que la hauteur de cette première unité peut être largement supérieure à l'épaisseur de la couche solide. Lorsque la première unité est remontée dans sa position finale, les volets du film de protection sont alors situés sur ladite surface périphérique de cette première unité dans une position horizontale. Les fentes dans les coins de l'ouverture peuvent ainsi être correctement fermées puisque les volets sont situés dans le plan général du film de protection ; ce qui permet de garantir une bonne étanchéité au passage du matériau de remplissage dans son état non solide, en particulier d'une résine dans un état liquide visqueux.

On remarquera que, dans la variante représentée à la Figure 12A, l'unité interne 10C présente du côté de sa face inférieure des bosses ou saillies qui laissent un espace libre entre cette unité interne et la surface supérieure de la couche 8, de manière à permettre à la résine de remplir cet espace lors de la formation d'une couche interne des cartes et de former ainsi un film de résine qui fixe solidement l'unité 10C à la couche 8.

## Revendications

1. Procédé de fabrication de cartes électroniques comprenant chacune au moins une première unité électronique (4;4A), agencée au moins partiellement dans une fenêtre (6;6A) d'une couche solide (8;8A) de la carte, et une deuxième unité électronique (10;10A;10B) reliée électriquement à la première unité électronique, ce procédé comprenant les étapes successives suivantes :
A) formation d'un ensemble électronique (40;40A;40B) en établissant une liaison électrique (18;64;64A) au moins entre ladite première unité électronique et ladite deuxième unité électronique;
B) apport d'une première couche solide (8;8A) ayant au moins une fenêtre (6;6A) destinée à recevoir au moins partiellement la première unité électronique et apport dudit ensemble électronique avec placement de la première unité électronique dans ladite fenêtre ;
C) apport d'un film de protection formé de plusieurs parties (24,26) présentant des profils respectifs prévus pour définir lors de leur assemblage une ouverture (32) dans laquelle passe ladite liaison électrique, cette ouverture ayant des dimensions inférieures à celles de la première unité électronique, ou formé d'une seule pièce (50;54) présentant au moins une fente (52 ;56a à 56d) depuis une ouverture (32) effectuée dans cette pièce, les dimensions de cette ouverture étant inférieures à celles de la première unité électronique, et mise en place de ce film de protection de manière qu'il recouvre la première couche solide dans une zone périphérique à ladite fenêtre ainsi qu'au moins une surface latérale et/ou le bord externe d'une face arrière de la première unité électronique pour fermer une fente éventuelle entre la paroi latérale (30) de la fenêtre et cette première unité électronique ;
D) apport au moins sur le film de protection d'un matériau de remplissage (42) se trouvant au moins partiellement dans une phase non solide lors de la formation d'une couche des cartes au moins partiellement par ce matériau de remplissage, ce dernier recouvrant au moins partiellement ladite liaison électrique dudit ensemble électronique.

2. Procédé de fabrication de cartes électroniques comprenant chacune au moins une première unité électronique (4;4A), agencée au moins partiellement dans une fenêtre (6;6A) d'une couche solide (8;8A) de la carte, et une deuxième unité électronique (10;10A;10B) reliée électriquement à la première unité électronique, ce procédé comprenant les étapes successives suivantes :
A) formation d'un ensemble électronique (40;40A;40B) en établissant liaison électrique (18;64;64A) au moins entre ladite première unité électronique et ladite deuxième unité électronique, apport d'un film de protection présentant ou agencé pour définir une ouverture (32) dont les dimensions sont inférieures à celles de la première unité électronique, et agencement du film de protection entre lesdites première et deuxième unités avec ladite liaison électrique traversant ladite ouverture ;
B) apport d'une première couche solide (8;8A) ayant au moins une fenêtre (6;6A) destinée à recevoir au moins partiellement la première unité électronique, apport dudit ensemble électronique pré-assemblé avec ledit film de protection, et placement de la première unité électronique dans ladite fenêtre et dudit film de protection partiellement sur ladite première couche solide à la périphérie de ladite fenêtre et, si pas effectué précédemment, partiellement contre la surface latérale et/ou le bord externe (5) d'une face arrière de la première unité électronique, de manière à fermer une fente éventuelle entre la paroi latérale de la fenêtre et cette première unité électronique;
C) apport au moins sur le film de protection d'un matériau de remplissage (42) se trouvant au moins partiellement dans une phase non solide lors de la formation d'une couche des cartes au moins partiellement par ce matériau de remplissage, ce dernier recouvrant au moins partiellement ladite liaison électrique dudit ensemble électronique.

3. Procédé de fabrication de cartes électroniques selon la revendication 2, **caractérisé en ce que** ledit film de protection est formé de plusieurs parties (24,26), présentant des profils respectifs prévus pour définir lors de leur assemblage une ouverture (32) dans laquelle passe ladite liaison électrique et ayant des dimensions inférieures à celles de la première unité électronique, ou formé d'une seule pièce (50;54) présentant au moins une fente depuis une ouverture (32) effectuée dans cette pièce et ayant des dimensions inférieures à celles de la première unité électronique.

4. Procédé de fabrication de cartes électroniques selon la revendication 1 ou 3, **caractérisé en ce que** ledit film de protection (50) a la forme générale d'une bague fendue.

5. Procédé de fabrication de cartes électroniques selon la revendication 1 ou 3, **caractérisé en ce que** ledit film de protection est formé de deux parties (24;26) dont l'une au moins a une forme générale en U ou les deux ont une forme en L.

6. Procédé de fabrication de cartes électroniques comprenant chacune au moins une première unité électronique (4), agencée au moins partiellement dans une fenêtre (6) d'une couche solide (8) de la carte, et une deuxième unité électronique (10C) reliée électriquement à la première unité électronique, ce procédé comprenant un premier groupe d'étapes suivantes :
A) formation d'un ensemble électronique (40C) en établissant une liaison électrique (64) au moins entre ladite première unité électronique et ladite deuxième unité électronique;
B) formation d'une structure comprenant un film de protection (76) présentant au moins une ouverture (32A), ayant des dimensions inférieures à celles de la première unité électronique et à sa périphérie des volets (80a à 80d), et une première couche solide (8) ayant au moins une fenêtre (6) destinée à recevoir au moins partiellement la première unité électronique, ledit film de protection étant assemblé à ladite première couche solide avec ladite au moins une ouverture centrée sur ladite au moins une fenêtre ; ce premier groupe d'étapes étant suivi des étapes successives suivantes :
C) apport de ladite structure et dudit ensemble électronique dans une installation de production de cartes et placement de la première unité électronique en regard de ladite ouverture, puis enfoncement de cette première unité dans ladite fenêtre en pliant lesdits volets en direction de la paroi latérale de l'ouverture jusqu'à ce que ces volets soient libérés et remontent alors au moins partiellement en direction du plan général du film de protection ;
D) on remonte la première unité en direction de ladite ouverture de manière que lesdits volets soient appliqués contre la surface latérale et/ou une face arrière de cette première unité, de manière à fermer une fente éventuelle entre la paroi latérale de la fenêtre et la première unité, ladite liaison électrique traversant ladite ouverture ;
E) apport au moins sur le film de protection d'un matériau de remplissage se trouvant au moins partiellement dans une phase non solide lors de la formation d'une couche des cartes au moins partiellement par ce matériau de remplissage, ce dernier recouvrant au moins partiellement ladite liaison électrique dudit ensemble électronique.

7. Procédé de fabrication de cartes électroniques selon la revendication 6, **caractérisé en ce que** ledit film de protection et ladite première couche solide sont laminées ensemble.

8. Procédé de fabrication de cartes électroniques selon la revendication 6 ou 7, **caractérisé en ce que** ledit film de protection présente initialement une pluralité d'ouvertures respectivement centrées sur une pluralité de fenêtres de la couche solide à laquelle ce film de protection est assemblé, ladite structure étant prévue pour la formation d'un lot de cartes incorporant chacune un ensemble électronique.

9. Procédé de fabrication de cartes électroniques selon l'une des revendications précédentes, **caractérisé en ce qu'**une première partie (42A) du matériau de remplissage est constituée par une résine apportée sous la deuxième unité électronique alors que celle-ci est relevée par rapport à la première couche solide ou tournée sur son côté supérieur, une deuxième partie du matériau de remplissage étant apportée ensuite sur cette deuxième unité électronique rabattue ou tournée à nouveau sur son côté inférieur de manière à être située sur ladite première partie de ce matériau de remplissage.

10. Procédé de fabrication de cartes électroniques selon l'une des revendications 1 à 8, **caractérisé en ce que** le matériau de remplissage est constitué par au moins une résine, cette résine étant étalée à l'aide d'un rouleau ou d'une lame ou introduite latéralement, la deuxième unité électronique étant agencée pour qu'une partie de cette résine pénètre sous celle-ci lors de la formation de ladite couche formée au moins partiellement par ledit matériau de remplissage.

11. Procédé de fabrication de cartes électroniques selon l'une des revendications 1 à 8, **caractérisé en ce qu'**une couche de résine (60) est déposée initialement sur la surface inférieure d'un support (12) de la deuxième unité électronique.

12. Procédé de fabrication de cartes électroniques selon l'une des revendications précédentes, **caractérisé en ce qu'**une deuxième couche solide (44) est apportée sur ledit matériau de remplissage avant qu'une pression soit appliquée sur celle-ci.

13. Procédé de fabrication de cartes électroniques selon l'une des revendications précédentes, **caractérisé en ce que** ledit film de protection présente une surface adhésive ou thermocollante (62) qui, une fois appliquée contre une face arrière de la première unité électronique, adhère à celle-ci.

14. Procédé de fabrication de cartes électroniques selon l'une des revendications précédentes, **caractérisé en ce que** ledit film de protection présente des dimensions limitées de manière qu'il ne s'étende pas sous la majeure partie de la deuxième unité électronique.

## Claims

1. Method of manufacturing electronic cards each including at least a first electronic unit (4; 4A) at least partially arranged in a window (6; 6A) in a solid layer (8; 8A) of the card, and a second electronic unit (10; 10A; 10B) electrically connected to the first electronic unit, this method including the following series of steps:
A) forming an electronic device or assembly (40; 40A; 40B) by making an electrical connection (18; 64; 64A) at least between said first electronic unit and said second electronic unit;
B) providing a first solid layer (8; 8A) having at least one window (6; 6A) for at least partially receiving the first electronic unit and providing said electronic device or assembly with the first electronic unit placed in said window;
C) providing a protective film formed of several parts (24, 26) having respective profiles which, when assembled, define an aperture (32) into which said electrical connection passes, said aperture having smaller dimensions than those of the first electronic unit, or formed of a single part (50; 54) having at least one slit (52; 56a to 56d) starting from an aperture (32) made in said part, the dimensions of said aperture being smaller than those of the first electronic unit, and placing said protective film such that it covers the first solid layer in a zone peripheral to said window and at least a lateral surface and/or the outer edge of a rear face of the first electronic unit to close any slit between the lateral wall (30) of the window and said first electronic unit;
D) at least on the protective film, providing a filler material (42) that is at least partially in a non solid phase when a card layer is being formed at least partially by said filler material, said material at least partially covering said electrical connection of said electronic device or assembly.

2. Method of manufacturing electronic cards each including at least a first electronic unit (4; 4A) at least partially arranged in a window (6; 6A) in a solid layer (8; 8A) of the card, and a second electronic unit (10; 10A; 10B) electrically connected to the first electronic unit, this method including the following series of steps:
A) forming an electronic device or assembly (40; 40A; 40B) by making an electrical connection (18; 64; 64A) at least between said first electronic unit and said second electronic unit, providing a protective film having or arranged to define an aperture (32) whose dimensions are smaller than those of the first electronic unit, and arranging the protective film between said first and second units with said electrical connection passing through said aperture;
B) providing a first solid layer (8; 8A) having at least one window (6; 6A) for at least partially receiving the first electronic unit, providing said pre-assembled electronic device or assembly with said protective film and placing the first electronic unit in said window and said protective film partially on said first solid layer at the periphery of said window and, if not previously performed, partially against the lateral surface and/or the outer edge (5) of a rear face of the first electronic unit, so as to close any slit between the lateral wall of the window and said first electronic unit;
C) at least on the protective film, providing a filler material (42) that is at least partially in a non solid phase when a card layer is being formed at least partially by said filler material, said material at least partially covering said electrical connection of said electronic device.

3. Electronic card manufacturing method according to claim 2, **characterized in that** said protective film is formed of several parts (24, 26), having respective profiles provided to define, when assembled, an aperture (32) into which said electrical connection passes and having smaller dimensions than those of the first electronic unit, or formed of a single part (50; 54) having at least one slit starting from an aperture (32) made in said part and having smaller dimensions than those of the first electronic unit.

4. Electronic card manufacturing method according to claim 1 or 3, **characterized in that** said protective film (50) has the general shape of a slit ring.

5. Electronic card manufacturing method according to claim 1 or 3, **characterized in that** said protective film is formed of two parts (24; 26) at least one of which is generally U-shaped or both parts are L-shaped.

6. Method of manufacturing electronic cards, each card including at least a first electronic unit (4) at least partially arranged in a window (6) in a solid layer (8) of the card, and a second electronic unit (10C) electrically connected to the first electronic unit, this method including a first group of the following steps:
A) forming an electronic device or assembly (40C) by making an electrical connection (64) at least between said first electronic unit and said second electronic unit;
B) forming a structure including a protective film (76) with at least one aperture (32) that has smaller dimensions than those of the first electronic unit and has flaps (80a to 80d) at the periphery thereof, and a first solid layer (8) having at least one window (6) for at least partially receiving the first electronic unit, said protective film being assembled to said first solid layer with said at least one aperture centred on said at least one window;
this first group of steps being followed by the second series of steps:
C) providing said structure and said electronic device or assembly to a card production equipment or facility and placing the first electronic unit opposite said aperture, then pushing said first unit into said window by folding said flaps in the direction of the lateral wall of the aperture until the flaps are released and then move back up at least partially towards the general plane of the protective film;
D) the first unit is moved back up towards said aperture so that said flaps are applied against the lateral surface and/or a rear face of said first unit so as to close any slit between the lateral wall of the window and the first unit, said electrical connection passing through said aperture;
E) at least on the protective film, providing a filler material that is at least partially in a non solid phase when a card layer is being formed at least partially by said filler material, said material at least partially covering said electrical connection of said electronic device.

7. Electronic card manufacturing method according to claim 6, **characterized in that** said protective film and said first solid layer are laminated together.

8. Electronic card manufacturing method according to claim 6 or 7, **characterized in that** said protective film initially has a plurality of apertures respectively centred on a plurality of windows in the solid layer to which said protective film is assembled, said structure being provided for forming a batch of cards each incorporating an electronic device or assembly.

9. Electronic card manufacturing method according to any of the preceding claims, **characterized in that** a first part (42A) of the filler material is formed by a resin provided underneath the second electronic unit while the latter is raised relative to the first solid layer or turned onto the top side thereof, a second part of the filler material being then provided on said second electronic unit which is folded down or turned onto the bottom side thereof so as to be located on said first part of said filler material.

10. Electronic card manufacturing method according to any of claims 1 to 8, **characterized in that** the filler material is formed by at least one resin, said resin being spread out using a roller or blade or introduced laterally, the second electronic unit being arranged such that a part of said resin penetrates underneath said second unit when said layer is being formed at least partially by said filler material.

11. Electronic card manufacturing method according to any of claims 1 to 8, **characterized in that** a resin layer (60) is initially deposited on the bottom surface of a support (12) of the second electronic unit.

12. Electronic card manufacturing method according to any of the preceding claims, **characterized in that** a second solid layer (44) is provided on said filler material before pressure is applied thereto.

13. Electronic card manufacturing method according to any of the preceding claims, **characterized in that** said protective film has an adhesive or heat reactivatable surface (62) which, once applied against a rear face of the first electronic unit, adheres thereto.

14. Electronic card manufacturing method according to any of the preceding claims, **characterized in that** said protective film has limited dimensions, such that said protective film does not extend underneath most of the second electronic unit.

## Patentansprüche

1. Verfahren für die Herstellung elektronischer Karten, wovon jede wenigstens eine erste elektronische Einheit (4; 4A), die wenigstens teilweise in einem Fenster (6; 6A) einer Feststoffschicht (8; 8A) der Karte angeordnet ist, und eine zweite elektronische Einheit (10; 10A; 10B), die mit der ersten elektronischen Einheit elektrisch verbunden ist, umfasst, wobei dieses Verfahren die folgenden aufeinander folgenden Schritte umfasst:
A) Bilden einer elektronischen Anordnung (40; 40A; 40B) durch Herstellen einer elektrischen Verbindung (18; 64; 64A) wenigstens zwischen der ersten elektronischen Einheit und der zweiten elektronischen Einheit;
B) Vorsehen einer ersten Feststoffschicht (8; 8A), die wenigstens ein Fenster (6; 6A) besitzt, das dazu bestimmt ist, die erste elektronische Einheit wenigstens teilweise aufzunehmen, und Vorsehen der elektronischen Anordnung mit Einsetzen der ersten elektronischen Einheit in das Fenster;
C) Vorsehen eines Schutzfilms, der aus mehreren Teilen (24, 26), die jeweilige Profile aufweisen, die vorgesehen sind, um bei ihrer Zusammenfügung eine Öffnung (32) zu definieren, durch die die elektronische Verbindung verläuft, wobei diese Öffnung Abmessungen besitzt, die kleiner sind als jene der ersten elektronischen Einheit, oder aus einem einzigen Stück (50; 54), das wenigstens einen Schlitz (52; 56a bis 56d) ausgehend von einer in diesem Stück ausgebildeten Öffnung (32) aufweist, wobei die Abmessungen dieser Öffnung kleiner sind als jene der ersten elektronischen Einheit, gebildet ist, und Anordnen dieses Schutzfilms in der Weise, dass er die erste Feststoffschicht in einer Umfangszone des Fensters sowie wenigstens eine seitliche Oberfläche und/oder einen äußeren Rand einer hinteren Fläche der ersten elektronischen Einheit abdeckt, um einen eventuellen Schlitz zwischen der Seitenwand (30) des Fensters und dieser ersten elektronischen Einheit zu verschließen;
D) Vorsehen auf dem Schutzfilm wenigstens eines Füllmaterials (42), das sich wenigstens teilweise in einer nicht festen Phase befindet, wenn eine Schicht der Karten wenigstens teilweise mittels dieses Füllmaterials gebildet ist, wobei dieses Letztere die elektrische Verbindung der elektronischen Anordnung wenigstens teilweise abdeckt.

2. Verfahren für die Herstellung elektronischer Karten, wovon jede wenigstens eine erste elektronische Einheit (4; 4A), die wenigstens teilweise in einem Fenster (6; 6A) einer Feststoffschicht (8; 8A) der Karte angeordnet ist, und eine zweite elektronische Einheit (10; 10A; 10B), die mit der ersten elektronischen Einheit elektrisch verbunden ist, umfasst, wobei dieses Verfahren die folgenden aufeinander folgenden Schritte umfasst:
A) Bilden einer elektronischen Anordnung (40; 40A; 40B) durch Herstellen einer elektrischen Verbindung (18; 64; 64A) wenigstens zwischen der ersten elektronischen Einheit und der zweiten elektronischen Einheit, Vorsehen eines Schutzfilms, der eine Öffnung (32) aufweist oder dazu ausgelegt ist, eine Öffnung zu definieren, deren Abmessungen kleiner als jene der ersten elektronischen Einheit sind, und Anordnen des Schutzfilms zwischen der ersten und der zweiten Einheit, wobei die elektrische Verbindung durch die Öffnung verläuft;
B) Vorsehen einer ersten Feststoffschicht (8; 8A), die wenigstens ein Fenster (6; 6A) besitzt, das dazu bestimmt ist, die erste elektronische Einheit wenigstens teilweise aufzunehmen, Vorsehen der vormontierten elektronischen Anordnung mit dem Schutzfilm und Anordnen der ersten elektronischen Einheit in dem Fenster und des Schutzfilms teilweise auf der ersten Feststoffschicht am Umfang des Fensters und, falls nicht bereits geschehen, teilweise an der seitlichen Oberfläche und/oder dem äußeren Rand (5) einer hinteren Fläche der ersten elektronischen Einheit, derart, dass ein eventueller Schlitz zwischen der Seitenwand des Fensters und dieser ersten elektronischen Einheit verschlossen wird;
C) Vorsehen wenigstens auf dem Schutzfilm eines Füllmaterials (42), das sich wenigstens teilweise in einer nicht festen Phase befindet, wenn eine Schicht der Karten wenigstens teilweise mittels dieses Füllmaterials gebildet wird, wobei dieses Letztere die elektrische Verbindung der elektronischen Anordnung wenigstens teilweise abdeckt.

3. Verfahren für die Herstellung elektronischer Karten nach Anspruch 2, **dadurch gekennzeichnet, dass** der Schutzfilm aus mehreren Teilen (24, 26), die jeweilige Profile aufweisen, die vorgesehen sind, um bei ihrer Zusammenfügung eine Öffnung (32) zu definieren, durch die die elektrische Verbindung verläuft und die Abmessungen besitzt, die kleiner sind als jene der ersten elektronischen Einheit, oder aus einem einzigen Stück (50; 54), das wenigstens einen Schlitz ausgehend von einer in diesem Stück ausgebildeten Öffnung (32) und mit Abmessungen, die kleiner sind als jene der ersten elektronischen Einheit, aufweist, gebildet ist.

4. Verfahren für die Herstellung elektronischer Karten nach Anspruch 1 oder 3, **dadurch gekennzeichnet, dass** der Schutzfilm (50) die allgemeine Form eines geschlitzten Rings besitzt.

5. Verfahren für die Herstellung elektronischer Karten nach Anspruch 1 oder 3, **dadurch gekennzeichnet, dass** der Schutzfilm aus zwei Teilen (24; 26) gebildet ist, wovon wenigstens einer die allgemeine Form eines U hat oder wovon beide die Form eines L haben.

6. Verfahren für die Herstellung elektronischer Karten, wovon jede wenigstens eine erste elektronische Einheit (4), die wenigstens teilweise in einem Fenster (6) einer Feststoffschicht (8) der Karte angeordnet ist, und eine zweite elektronische Einheit (10C), die mit der ersten elektronischen Einheit elektrisch verbunden ist, umfasst, wobei dieses Verfahren eine erste Gruppe der folgenden Schritte umfasst:
A) Bilden einer elektronischen Anordnung (40C) durch Herstellen einer elektrischen Verbindung (64) wenigstens zwischen der ersten elektronischen Einheit und der zweiten elektronischen Einheit;
B) Bilden einer Struktur, die einen Schutzfilm (76) enthält, der wenigstens eine Öffnung (32A) aufweist, die Abmessungen hat, die kleiner sind als jene der ersten elektronischen Einheit, und an ihrem Umfang Klappen (80a bis 80d) besitzt, und eine erste Feststoffschicht (8) enthält, die wenigstens ein Fenster (6) besitzt, das dazu bestimmt ist, die erste elektronische Einheit wenigstens teilweise aufzunehmen, wobei der Schutzfilm mit der ersten Feststoffschicht so zusammengefügt wird, dass die wenigstens eine Öffnung auf das wenigstens eine Fenster zentriert ist;
wobei dieser ersten Gruppe von Schritten die folgenden aufeinander folgenden Schritte folgen:
C) Vorsehen der Struktur und der elektronischen Anordnung in einer Anlage für die Herstellung von Karten und Anordnen der ersten elektronischen Einheit gegenüber dieser Öffnung, dann Eintreiben dieser ersten Einheit in das Fenster durch Umbiegen der Klappen in Richtung der Seitenwand der Öffnung, bis diese Klappen freigegeben werden und sich dann wenigstens teilweise in Richtung der allgemeinen Ebene des Schutzfilms aufwärts bewegen;
D) Anheben der ersten Einheit in Richtung der Öffnung, derart, dass die Klappen gegen die seitliche Oberfläche und/oder eine hintere Fläche dieser ersten Einheit gedrückt werden, so dass ein eventueller Schlitz zwischen der Seitenwand des Fensters und der ersten Einheit verschlossen wird, wobei die elektrische Verbindung durch diese Öffnung verläuft;
E) Vorsehen wenigstens auf dem Schutzfilm eines Füllmaterials, das sich wenigstens teilweise in einer nicht festen Phase befindet, wenn eine Schicht der Karten wenigstens teilweise mittels dieses Füllmaterials gebildet wird, wobei dieses Letztere wenigstens teilweise die elektrische Verbindung der elektronischen Anordnung abdeckt.

7. Verfahren für die Herstellung elektronischer Karten nach Anspruch 6, **dadurch gekennzeichnet, dass** der Schutzfilm und die erste Feststoffschicht zusammen laminiert werden.

8. Verfahren für die Herstellung elektronischer Karten nach Anspruch 6 oder 7, **dadurch gekennzeichnet, dass** der Schutzfilm anfangs mehrere Öffnungen aufweist, die jeweils auf mehrere Fenster der Feststoffschicht zentriert sind, mit der dieser Schutzfilm zusammengefügt wird, wobei die Struktur für die Bildung eines Loses von Karten vorgesehen ist, wovon jede eine elektronische Anordnung enthält.

9. Verfahren für die Herstellung elektronischer Karten nach einem der vorhergehenden Ansprüche, **dadurch gekennzeichnet, dass** ein erster Teil (42A) des Füllmaterials aus einem Harz gebildet ist, das unter der zweiten elektronischen Einheit vorgesehen wird, während diese in Bezug auf die erste Feststoffschicht angehoben oder auf ihre Oberseite gedreht wird, wobei ein zweiter Teil des Füllmaterials anschließend auf dieser zweiten elektronischen Einheit vorgesehen wird, die nach unten gedrückt oder wieder auf ihre Unterseite gedreht wird, derart, dass sie sich auf dem ersten Teil dieses Füllmaterials befindet.

10. Verfahren für die Herstellung elektronischer Karten nach einem der Ansprüche 1 bis 8, **dadurch gekennzeichnet, dass** das Füllmaterial durch wenigstens ein Harz gebildet ist, wobei dieses Harz mithilfe einer Rolle oder eines Plättchens ausgebreitet oder seitlich eingeführt wird, wobei die zweite elektronische Einheit dafür ausgelegt ist, dass ein Teil dieses Harzes unter ihr eindringt, wenn die Schicht gebildet wird, die wenigstens teilweise mittels des Füllmaterials gebildet wird.

11. Verfahren für die Herstellung elektronischer Karten nach einem der Ansprüche 1 bis 8, **dadurch gekennzeichnet, dass** anfangs auf der unteren Oberfläche eines Trägers (12) der zweiten elektronischen Einheit eine Harzschicht (60) aufgebracht wird.

12. Verfahren für die Herstellung elektronischer Karten nach einem der vorhergehenden Ansprüche, **dadurch gekennzeichnet, dass** eine zweite Feststoffschicht (44) auf dem Füllmaterial vorgesehen wird, bevor auf dieses ein Druck ausgeübt wird.

13. Verfahren für die Herstellung elektronischer Karten nach einem der vorhergehenden Ansprüche, **dadurch gekennzeichnet, dass** der Schutzfilm eine klebende oder wärmeklebende Oberfläche (62) aufweist, die, sobald sie gegen eine hintere Fläche der ersten elektronischen Einheit gedrückt wird, an dieser anhaftet.

14. Verfahren für die Herstellung elektronischer Karten nach einem der vorhergehenden Ansprüche, **dadurch gekennzeichnet, dass** der Schutzfilm begrenzte Abmessungen aufweist, derart, dass er sich nicht unter den Hauptteil der zweiten elektronischen Einheit erstreckt.
